# EUROPÄISCHE PATENTANMELDUNG

(11) **EP 0 942 504 A1**
(43) Veröffentlichungstag der Anmeldung: **15.09.1999**
(21) Anmeldenummer: 99100894.7
(22) Anmeldetag: 19.01.1999
(51) Int. Cl.: H02G 1/08, H02G 9/06, G02B 6/50, G02B 6/44

(54) **Verfahren zur Befestigung von Kabeln in Kanal- oder Rohrsystemen**

(30) Priorität: 12.03.1998 DE 19810824; 23.10.1998 DE 19849039
(71) Anmelder: SIEMENS AKTIENGESELLSCHAFT, 80333 München (DE)
(72) Erfinder: Dotzer, Peter, 82335 Berg (DE); Mayr, Ernst, 82319 Starnberg (DE); Diermeier, Heinz, 81739 München (DE); Finzel, Lothar, 85617 Unterschleissheim (DE)

(57) **Zusammenfassung**

Bei der Erfindung handelt es sich um ein Verfahren zur Befestigung von Kabeln (KB) oder langgestreckten Hohlprofilen (HP) in Kanal- oder Rohrsystemen (K) für fließende Medien und ein Kabelnetz in einem Kanal- oder Rohrsystem. Das zu verlegende Kabel (KB) oder langgestreckte Hohlprofil (HP) wird mit zugfesten Elementen (ZE) zwischen Abspannpunkten (ASP) abgespannt. Das zugfeste Element (ZE) kann ein separates Element oder ein im Kabelmantel (KM) oder im Hohlprofil (HP) eingelagertes Element sein. Weiterhin handelt es sich um die Reduzierung von Durchhängen (DHO).

## Beschreibung

Die Erfindung betrifft ein Verfahren zur Befestigung von Kabeln in Kanal- oder Rohrsystemen für fließende Medien, wie Gas, Ab-, Regen- oder Mischwasser.

Durch das Gebrauchsmuster DE 29 700 912 - U1 ist ein Lichtwellenleiterkabelnetz bekannt, das in einem nicht begehbaren Kanal- oder Rohrsystem eingebracht wird. Das hierfür verwendete Lichtwellenleiterkabel wird zum Beispiel mit federnden Befestigungselementen fixiert, wobei das Lichtwellenleiterkabel zwischen der Wandung und dem Befestigungselement angeordnet wird. Für die Befestigung bzw. für das Einbringen der Befestigungselemente in nicht begehbare Kanal- oder Rohrsysteme werden hierfür entsprechende Roboter benötigt, die ferngesteuert in entsprechenden Abständen die Befestigungselemente absetzen und damit das eingebrachte Lichtwellenleiterkabel fixieren.

Der Erfindung liegt eine erste Aufgabe zugrunde, ein Verfahren zu schaffen, mit dem in einfacher Weise die Verlegung eines Kabels oder eines langgestreckten Hohlprofils in einem Kanal- oder Rohrsystem ermöglicht wird. Diese gestellte Aufgabe wird mit einem Verfahren der eingangs erläuterten Art durch die Merkmale des Patentanspruchs 1 bzw. des Patentanspruchs 2 gelöst.

Weiterhin liegt der Erfindung eine zweite Aufgabe zugrunde, die darin besteht, ein Kabelnetz für ein Kanal- oder Rohrsystem zu konzipieren, das nach dem erfindungsgemäßen Verfahren dort installiert werden kann. Diese gestellte Aufgabe wird mit einem Kabelnetz gemäß der Merkmale der Patentansprüche 20 bzw. 21 gelöst.

Gegenüber dem bekannten Stand der Technik ergeben sich durch das erfindungsgemäße Verfahren und das erfindungsgemäße Kabelnetz erhebliche Vorteile, die sich in erster Linie in einer einfachen und kurzen Montage zeigen, wobei die hierfür benötigten Mittel ebenfalls einfach und äußerst kostengünstig sind. Weitere Vorteile sind darin zu sehen, daß bei dem Verfahren gemäß der Erfindung der Kanal oder das Rohr durch das eingebrachte Kabel kaum verstopfen kann, da innerhalb des Kanals oder Rohrs keine Ansatzpunkte für Verunreinigungen zu finden sind. Die Montage eines Kabels durch Abspannen ist im allgemeinen bereits aus der Luftkabeltechnik bekannt, so daß die im wesentlichen dort gebräuchlichen Hilfsmittel auch bei der Montage innerhalb eines Kanal- oder Rohrsystems angewendet werden können. Wie sich jedoch zeigt, bedarf es intensiver Überlegungen ein derartiges Verlegesystem in einem Kanal- oder Rohrsystem einzusetzen, da bisher nur aufwendigere Montageverfahren benutzt wurden. So sind bisher bei nicht begehbaren Kanal- oder Rohrsystemen Roboterfahrzeuge nötig, um die nachträglich eingeführten Kabel so zu befestigen, daß sie kein Hindernis darstellen. Außerdem ist von Vorteil, daß das erfindungsgemäße Verfahren bei jeder Art von Kanälen oder Rohren aus Metall, Steinzeug oder Kunststoff verwendet werden kann, da die Befestigungen für ein zugfestes Element an den Abspannpunkten vorgenommen werden, die jeweils an den Zugangsstellen des Kanal- oder Rohrnetzes angeordnet werden. Auch ist von Vorteil, daß beispielsweise bei Kanalreparaturen die Kabel bzw. Hohlprofile mit geringstem Aufwand aus dem Kanal entfernt werden können, so daß die Reparatur ohne Schwierigkeiten durchgeführt werden kann. Anschließend ist die Installation ebenso einfach wie bei der ursprünglichen Verlegung.

Bei dem erfindungsgemäßen Verfahren wird zunächst das Kabel oder das Hohlprofil eingezogen oder eingeschoben. Danach werden die Abspannpunkte an den Schachtwänden bzw. Schachtauslässen des Kanal- oder Rohrsystems befestigt. Im einfachsten Fall wird gemäß der Erfindung ein zugfestes Element, zum Beispiel ein an sich bekanntes Zugseil wie z.B. ein Stahlseil an den Abspannpunkten eingehängt und mit einem Spannschloß entsprechend abgespannt. An ein solches zugfestes Element kann nun jedes beliebige Kabel oder langgestrecktes Hohlprofil mit geeigneten Befestigungsmitteln, zum Beispiel mit Klemmen oder Abfangspiralen, angehängt werden. Da das zugfeste Element mit dem angehängten Kabel oder Hohlprofil jeweils im oberen Bereich des Kanals bzw. Rohres abgehängt ist, stört es den Fluß der fließenden Medien wie Gas, Ab-, Regen- oder Mischwasser nicht, so daß sich keine Ablagerungen bilden können. Außerdem ist es nach wie vor möglich ohne Behinderungen Roboter zum Beispiel für Prüfzwecke des Kanalsystems einzusetzen. Die mögliche Abspannlänge eines solchen zugfesten Elementes mit angehängtem Kabel oder Hohlprofils richtet sich jeweils nach der Kanalführung und der zulässigen Abspannkraft des zugfesten Elementes. Zusätzlich kann das zugfeste Element auch in Zwischenschächten zusätzlich fixiert werden mit Hilfe von Tragspiralen oder Umlenkrollen, wodurch größere Abspannlängen ermöglicht werden.

Bei diesem erfindungsgemäßen Verfahren können jedoch auch zugfeste Kabel verwendet werden, bei denen bereits zugfeste Elemente im Kabelaufbau, insbesondere im Kabelmantel oder im Hohlprofil eingelagert oder an der Oberfläche befestigt sind. Der Verlegevorgang gestaltet sich bei dieser Variante noch einfacher, da das zugfeste Element bereits mit dem Kabel oder Hohlprofil eine Einheit bildet, so daß nur ein Verlegevorgang benötigt wird. An den Abspannpunkten wird dann jeweils das zugfeste Element aus dem Kabelaufbau bzw. dem Hohlprofil herausgenommen und für Abspannzwecke an den Abspannpunkten fixiert. Es können auch Abspannspiralen auf das jeweilige Kabel aufgewickelt werden, die dann an dem jeweiligen Abspannpunkt eingehängt werden. Am anderen Ende des Kabels oder Hohlprofils wird dann noch ein Spannschloß dazwischengehängt, mit dem schließlich die nötige Abspannung erfolgt.

Je nach Verfahren können beliebige Kabeltypen für diese Verlegungsart eingesetzt werden, wie zum Beispiel Mikrokabel, die aus einem dünnen Rohr und lose darin eingebrachten Lichtwellenleitern bestehen. Auch dielektrische Kabel zum Beispiel ein 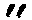 All dielectric self supportly - cable" (ADSS) mit z.B. nagetiersicherem Mantel oder auch ein sogenanntes TOP-Kabel, das einen Glasfaserkunststoff-Mantel über der Kabelseele trägt, können verwendet werden. Weitere Kabeltypen werden im Zusammenhang mit der Figurenbeschreibung angegeben.

Die Erfindung wird nun anhand von dreizehn Figuren näher erläutert.
- Figur 1: zeigt ein Kabelnetz gemäß der Erfindung, bei dem ein zugfestes Kabel eingezogen und abgespannt ist.
- Figur 2: zeigt ein zugfestes Lichtwellenleiterkabel mit eingelagerten zugfesten Elementen.
- Figur 3: zeigt ein langgestrecktes Hohlprofil mit außen liegenden zugfesten Elementen.
- Figur 4: zeigt ein ovales Hohlprofil mit eingelagerten zugfesten Elementen.
- Figur 5: zeigt ein langgestrecktes Hohlprofil mit rundem Querschnitt.
- Figur 6: verdeutlicht die Befestigung eines Lichtwellenleiterkabels an einem separaten zugfesten Element.
- Figur 7: zeigt den Querschnitt durch ein Mikroseekabel.
- Figur 8: zeigt ein zugfestes Luftkabel.
- Figur 9: zeigt ein TOP-Kabel mit einem Glasfaserkunststoffmantel.
- Figur 10: zeigt ein OWK-Kabel mit zwei gegenüberliegenden zugfesten Elementen im Kabelmantel.
- Figur 11: zeigt zwei Befestigungsvarianten zum Abspannen zugfester Elemente.
- Figur 12: zeigt den Stand der Technik
- Figur 13: zeigt den Einsatz eines Anpressmittels gemäß der Erfindung im Mittelbereich einer Abspannlänge.

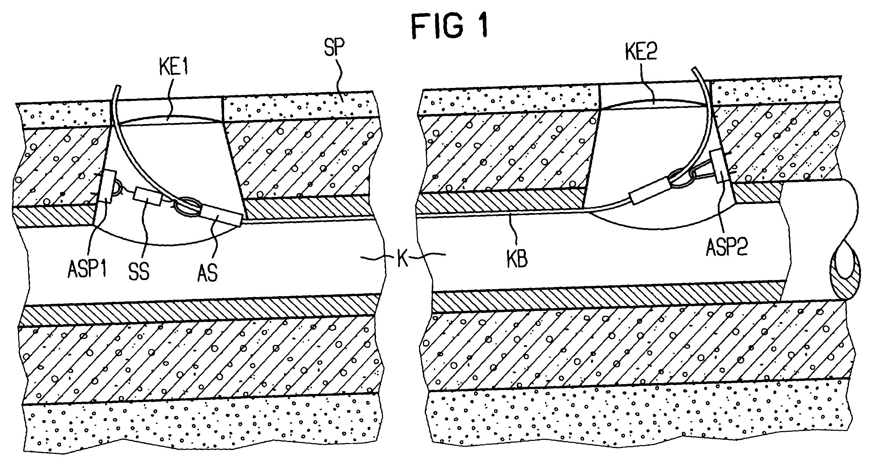

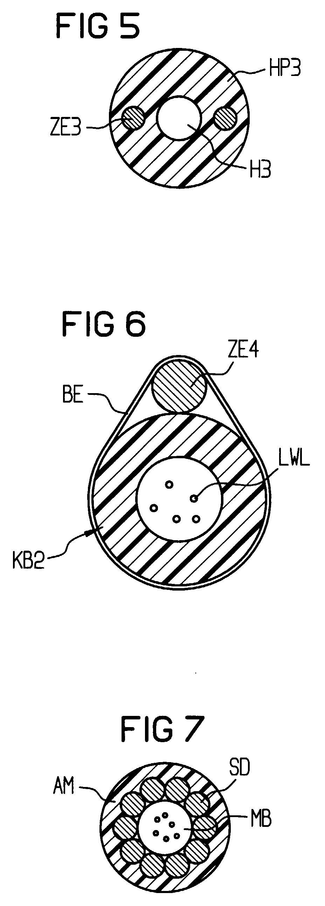

In Figur 1 wird ein abgespanntes Kabel KB gezeigt, das innerhalb eines Kanal- oder Rohrsystems K eingezogen und abgespannt ist. Bei diesem Ausführungsbeispiel handelt es sich um ein Kabel KB, in dem selbst zugfeste Elemente integriert sind. Ein Abspannfeld erstreckt sich im allgemeinen von einer zugänglichen Kanaleinlaßstelle KE1 zu einer zweiten Kanaleinlaßstelle KE2, die im allgemeinen als Einstiegsschächte ausgebildet sind. An den Wandungen dieser Kanaleinlaßstellen KE1 bzw. KE2 sind Abspannpunkte ASP1 bzw. ASP2 verankert, an denen zumindest ein zugfestes Element des Kabels befestigt wird, wobei an der Austrittsstelle des Kabels jeweils eine Abspannspirale AS oder ähnliche Halterung angeordnet wird. An einem Ende des Abspannfeldes wird diese Abspannspirale AS direkt an den Abspannpunkt ASP2 angehängt, während die zweite Aspannspirale AS in ein Spannschloß SS eingehängt wird. Das Spannschloß SS wird dann mit seinem zweiten Ende an dem Abspannpunkt ASP1 eingehängt und dient zur Abspannung des Kabels KB bzw. des darin eingelagerten zugfesten Elementes, das hier der Übersichtlichkeit halber nicht gezeichnet ist. Das Kabel KB selbst wird dann weiter geführt, zum Beispiel zu einem entsprechenden Auslaß, einem Hausanschluß oder dergleichen. Eine ähnliche Konstellation ergibt sich, wenn ein separates zugfestes Element innerhalb des Kanal- oder Rohrsystems K abgespannt wird, wobei jedoch dann das entsprechende Kabel mit Befestigungsmitteln wie es zum Beispiel in Figur 6 dargestellt ist, angehängt wird. In diesem Fall ist dann kein zugfestes Kabel erforderlich, das heißt, es kann bei Verwendung eines separaten zugfesten Elementes jede Art von Kabel verwendet werden, wie später in nachfolgenden Zeichnungen an Beispielen aufgezeigt wird. Aus dieser Figur 1 geht deutlich hervor, daß im großen und ganzen der Freiraum des Kanal- oder Rohrsystems freibleibt von Befestigungseinheiten für Kabel wie sie bisher beim Stand der Technik benötigt wurden. Das Kanal- oder Rohrsystem kann in beliebigen Untergrund, zum Beispiel unterhalb eines Straßenprofils SP angeordnet sein, wobei die Ein- und Auslaßstellen auch für die Zu- bzw. Abführung der Kabel genützt werden. Außerdem ist von großem Vorteil, daß mehrere Kabel parallel geführt werden können, wobei unter Umständen sogar das zugfeste Element für mehrere Kabel genutzt werden kann. Beim Einzug von Hohlprofilen mit oder ohne zugfeste Elemente sind die gleichen Prinzipien der Erfindung gültig, so daß sich weitere Skizzen oder Beschreibungen erübrigen.

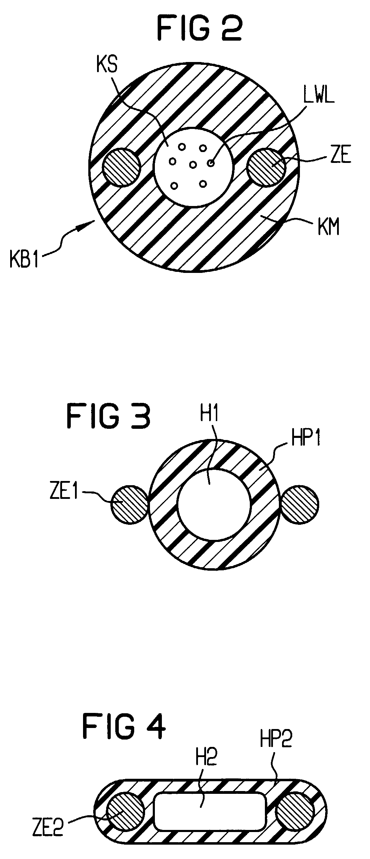

Figur 2 zeigt ein Lichtwellenleiterkabel KB1, bei dem im Kabelmantel KM bereits gegenüberliegend zwei längsverlaufende zugfeste Elemente integriert sind. In der Kabelseele KS befinden sich beispielsweise Lichtwellenleiter oder auch Kupferleiter oder eine Kombination von beiden. Bei diesem Kabel KB1 ist somit kein zusätzliches zugfestes Element nötig, da die Abspannung über die integrierten zugfesten Elemente ZE vorgenommen werden kann.

Figur 3 zeigt, daß das Verlegeverfahren auch für langgestreckte Hohlprofile HP1 genutzt werden kann, wobei hier zugfeste Elemente ZE1 längsverlaufend entlang des Hohlprofils festhaftend angeordnet sind. Über diese zugfesten Elemente ZE1 erfolgt wiederum die Abspannung an den Abspannpunkten. In den Hohlraum H1 des Hohlprofils HP1 können nun nachträglich beliebig elektrische Leiter, Lichtwellenleiter, Lichtwellenleiterbändchen, elektrische Kabel, dielektrische Kabel oder speziell auch Mikrokabel eingebracht werden.

In Figur 4 wird ein flaches bzw. ovales Hohlprofil HP2 gezeigt, das längsverlaufend einen entsprechend geformten Hohlraum H2 aufweist, in dem wiederum die entsprechenden Leiter oder Kabel beliebiger Art eingezogen werden können. Über zwei längsverlaufende integrierte zugfeste Elemente ZE2 erfolgt wiederum die Abspannung innerhalb des Kanal- bzw. Rohrsystems.

Figur 5 zeigt ein Hohlprofil HP3 mit kreisförmigem Querschnitt, in dessen längsverlaufendem Hohlraum H3 beliebig Leiter oder Kabel eingeführt werden können. Über die zugfesten Elemente ZE3 wird wiederum die Abspannung vorgenommen.

Figur 6 zeigt nun das bei der Beschreibung zur Figur 1 angedeutete Beispiel für das Verlegen eines Kabels, das keine zugfesten Elemente beinhaltet. Im Inneren eines solchen Kabels KB2 können beliebige Leiter geführt werden, wie zum Beispiel bei diesem Ausführungsbeispiel Lichtwellenleiter. Die Abspannung innerhalb des Kanal- oder Rohrsystems erfolgt bei diesem Ausführungsbeispiel dann nicht über Elemente des Kabels KB2, sondern über ein separates zugfestes Element ZE4, das an den Abspannpunkten gefaßt und über ein Spannschloß abgespannt wird. An diesem abgespannten zugfesten Element ZE4 wird dann mit Hilfe von Befestigungsmitteln BE das Kabel KB2 angehängt und fixiert. Somit kann das einfache Verfahren gemäß der Erfindung auch bei Kabeln oder auch bei Hohlprofilen ohne zugfeste Elemente eingesetzt werden.

Figur 7 zeigt in einem Beispiel, daß auch ein Mikroseekabel verwendet werden kann, das im Inneren beispielsweise Maxibündel MB mit Lichtwellenleiterfasern enthalten kann. Das Maxibündel kann aus Metall oder aus Kunststoff bestehen. Darüber sind verseilte Stahldrähte SD angeordnet, die beim Abspannen nach dem Verfahren gemäß der Erfindung zur Abspannung an den Abspannpunkten herangezogen werden. Darüber erstreckt sich ein Außenmantel AM, der zum Beispiel aus Polyethylen besteht.

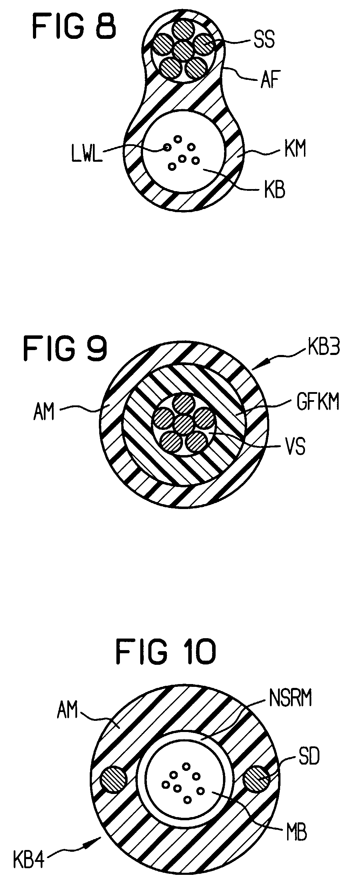

Figur 8 zeigt ein sogenanntes Nurmantel Kabel z.B. ein 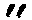 figure 8 -Kabel". Hier handelt es sich um eine Kombination aus einem beliebigem Kabel K und einem Stahlseil SS, die übereinanderliegend von einem gemeinsamen Kunststoffmantel umgeben sind, wobei das zugfeste Element SS auch in einer Ausformung AF des Kabelmantels verlaufen kann. Das Stahlseil SS dient in diesem Fall zum Abspannen innerhalb des Kanal- oder Rohrsystems nach dem erfindungsgemäßen Verfahren. Als Kabel kann beispielsweise auch ein Mikrokabel, bestehend aus einem Rohr und darin lose eingebrachten Lichtwellenleitern, verwendet werden. Wenn es sich um ein metallisch leitendes Rohr handelt, kann dieses beispielsweise auch als Stromleitung mit verwendet werden. Für den Einsatz in einem Kanal- oder Rohrsystem eignen sich besonders auch nagetiergeschützte Kabel.

Figur 9 zeigt ein optisches Luftkabel mit einem rohrförmigen Tragelement (TOP-Kabel), das ebenfalls nach dem erfindungsgemäßen Verfahren verlegt und abgespannt werden kann. Dieses Kabel KB3 wird als Ganzes abgespannt, da es einen zugfesten Glasfaserkunststoff - Mantel enthält. Im Inneren befindet sich dort entweder eine verseilte Kabelseele oder ein Maxibündel von Lichtwellenleitern. Das ganze System ist mit einem Außenmantel AM umgeben.

Figur 10 zeigt noch ein sogenanntes OWK-Kabel, das im Außenmantel AM gegenüberliegend zugfeste Elemente in Form von Stahldrähten SD eingelagert hat. Der Kern dieses Kabels KB4 enthält eine verseilte Kabelseele oder ein Maxibündel MB von Lichtwellenleitern, umgeben von einem nagetiersicheren Rillmantel NSRM.

Außer diesen genannten Ausführungsbeispielen von Kabeln eignen sich im großen und ganzen weitere Ausführungsformen, die im Prinzip den Anforderungen den in einem Kanal- und Rohrsystem herrschenden Verhältnissen widerstehen können.

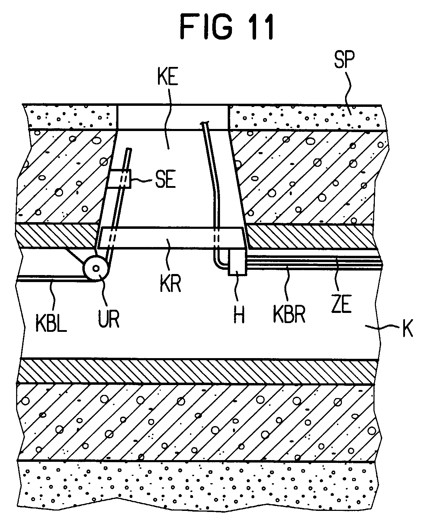

Als Abspannpunkte für die zugfesten Elemente können beispielsweise Haken, Ringösen oder ähnliche Befestigungselemente dienen, die z.B. in den Einlaß- oder Einstiegsstellen des Kanal- oder Rohrsystems eingedübelt oder eingeschlagen werden. In Figur 11 werden zwei weitere Varianten zum Befestigen der zugfesten Elemente gezeigt, wobei es gleichgültig ist ob das jeweilige zugfeste Element im Kabel angeordnet ist oder ob ein selbständiges Element verwendet wird. So kann auch eine Spreizvorrichtung, z.B. ein Spreizring oder Klemmring KR in der Einstiegstelle des Kanal- oder Rohrsystems durch Aufspreizen verklemmt werden, so daß der Einstiegsschacht bei der Befestigung nicht verletzt wird. An diesem Klemmring KR ist mindestens eine Halterung H angeordnet, die in den Kanal oder das Rohr hineinragt, um eine freie Abspannung des zugfesten Elements ZE gewährleisten zu können. Bei der Abspannvariante im rechten Teil der Figur 11 ist beispielsweise ein Kabel KBR ohne zugfeste Elemente verwendet, so daß ein separates zugfestes Element ZE an der Halterung H abgespannt ist, an dem das Kabel KBR angehängt ist. Das Kabel KBR wird in die Einlaßstelle KE weitergeleitet.

Auf der linken Seite dieser Figur 11 ist eine Variante gezeigt, bei der das Kabel KBL über eine Umlenkrolle UR in die Einlaßstelle hochgeführt wird, wo das zugfeste Element z.B. des Kabels dann am Abspannpunkt mit einer Spanneinheit SE befestigt wird.

Bei allen Ausführungsbeispielen gemäß der Erfindung können auch mehrere Abspanneinheiten von Kabeln und/oder zugfesten Elementen parallel verlaufend angeordnet werden. Bei Verwendung eines elektrisch leitenden separaten zugfesten Elements könnte dieses als Stromabnehmer für Roboter verwendet werden, die für Servicezwecke eingesetzt werden.

Bei allen Ausführungsbeispielen gemäß der Erfindung können an den Einlaßstellen auch Aufnahmen für Kabel- und/oder Lichtwellenleiterüberlängen angeordnet werden, z.B. in den Klemmringen, die dann mit entsprechenden Führungen und Halterungen versehen werden.

Der vorliegenden Erfindung liegt weiterhin die Aufgabe zugrunde, bei abgespannten Kabeln oder langgestreckten Hohlprofilen innerhalb eines Kanal- oder Rohrsystems den Durchhang zwischen zwei Abspannstellen zu verringern. Diese gestellte Aufgabe wird mit einem Verfahren der eingangs erläuterten Art dadurch gelöst, daß mindestens ein Anpressmittel im Bereich zwischen zwei Abspannpunkten innerhalb des Kanal- oder Rohrsystems eingesetzt wird und daß anschließend durch Aufweitung des Anpressmittels das zugfeste Element mit einem angehängten Kabel oder ein Kabel mit mindestens einem zugfesten Element oder ein langgestrecktes Hohlprofil mit mindestens einem zugfesten Element gegen die Innenwandung des Kanal- oder Rohrsystems gepresst wird.

Weiterhin ist Aufgabe der Erfindung, ein entsprechendes Anpressmittel zur Durchführung des Verfahrens zu gestalten. Diese gestellte Aufgabe wird mit einem Kabelnetz nach den Merkmalen der Ansprüche 40 bis 43 gelöst.

Wie bereits bekannt ist, werden zugfeste Elemente mit einem angehängten Kabel, Kabel mit mindestens einem integrierten zugfesten Element oder ein langgestrecktes Hohlprofil mit einem zugfesten Element in Kanal- oder Rohrsystemen zwischen Einstiegschächten gespannt. Bei sehr großen Abspannlängen oder auch bei nicht geradem Verlauf des Kanal- oder Rohrsystems ist ein erhöhter Durchhang im Mittelbereich möglich, durch den ggf. Probleme bei den üblichen Reinigungsverfahren oder beim Kanalbetrieb auftreten können. Gemäß der Erfindung wird nun ein aufweitbares oder aufspreizbares Anpressmittel in dem Bereich des größten Durchhanges eingebracht und dort schließlich aufgeweitet bzw. aufgespreizt. Dadurch wird das eingebrachte zugfeste Element mit angehängtem Kabel, das Kabel mit einem integrierten zugfesten Element oder ein Hohlprofil mit einem zugfesten Element gegen die Innenwandung des Kanal- oder Rohrsystems gepresst, so daß dadurch kein Durchhang mehr gegeben ist. Durch die Aufteilung der großen Abspannlänge in zwei Teilbereiche wird der in den Teilbereichen sich einstellende Durchhang wesentlich vermindert, so daß keine Störung im Kanalbetrieb zu erwarten ist. Als Anpressmittel wird gemäß der Erfindung z.B. ein Kunststoffschlauch verwendet, der bei Bedarf mit Glasfasern verstärkt ist, und im allgemeinen als 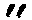 Partliner" bezeichnet wird. Dieser Kunststoffschlauch ist vorzugsweise mit einem aushärtbaren Kleber beschichtet oder durchtränkt, so daß er nach dem Aufweiten bzw. Aufspreizen an der Innenwandung des Kanal- oder Rohrsystems fixiert werden kann. Ein solcher Partliner wird z.B. auf eine Gummiblase geschoben und mit Hilfe eines Roboters zur vorgesehenen Stelle, meist in die Mitte einer Abspannlänge, gebracht. Dort wird die Blase mit Luft oder einem Treibgas aufgeblasen, so daß der Partliner an die Innenwandung gedrückt wird und durch den Kleber bereits haftet. Nach dem Andrücken des Partliners an die Innenwandung wird die Blase wieder entfernt und je nach Kleberart wird die Aushärtung des Klebers mit Hilfe von UV- oder Infrarotbestrahlung oder mit Heißluft vorgenommen.

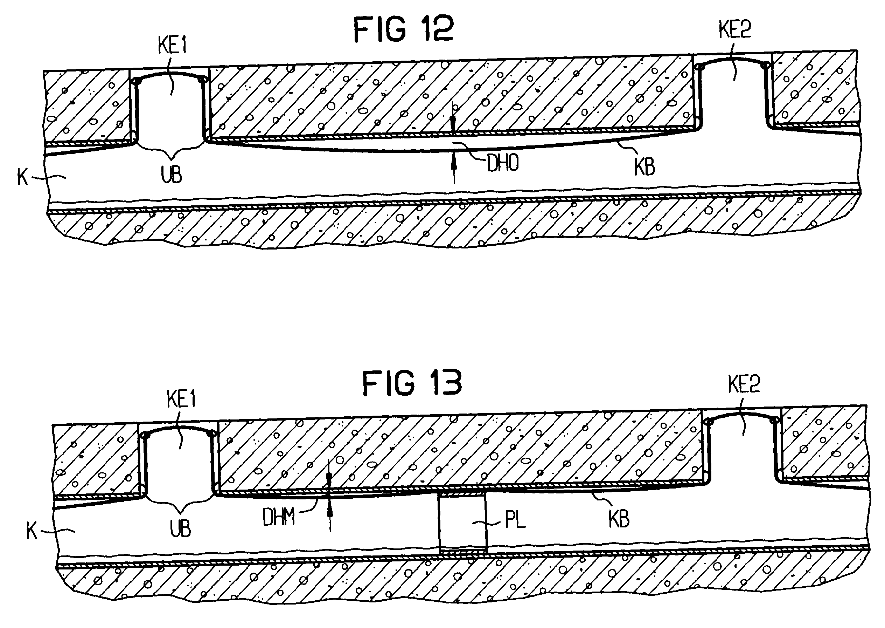

Es können auch Anpressmittel in Form von aufspreizbaren oder aufweitbaren Ringen aus Kunststoff oder Stahl, insbesondere Edelstahl, verwendet werden. Solche Anpressmittel können separat für sich oder auch im Zusammenhang mit einem schlauchförmigen Partliner verwendet werden, wenn z.B. die Stützkraft des Partliners verstärkt werden soll. In einem solchen Fall wird dann zunächst das Anpressmittel in Form des Ringes durch Aufpreizen oder Aufweitung installiert und anschließend wird der schlauchförmige Partliner darüber in der bereits beschriebenen Art montiert. Als Kleber für den Partliner eignen sich die im allgemeinen für derartige Einsatzfälle geeigneten Materialien, die insbesondere wasser- und chemikalienfest sein müssen. So ist auch durchaus der Einsatz von Zweikomponentenklebern möglich. Dieser Teil der Erfindung wird nun anhand der Figuren 12 und 13 näher erläutert.

In FIG 12 wird gezeigt, daß z.B. ein zugfestes Element mit einem angehängten Kabel, ein Kabel mit einem integrierten zugfesten Element oder ein Hohlprofil mit einem zugfesten Element - hier allgemein bezeichnet mit Kabel KB - in einem Kanal- oder Rohrsystem K, z.B. für Gas, Ab-, Regen- oder Mischwasser zwischen zwei Kanaleinlaßstellen KE1 und KE2 abgespannt ist. Hier ist angedeutet, daß das Kabel KB in den Einlaßstellen KE1 und KE2 fixiert ist und über Umlenkbögen UB jeweils in das Kanal- oder Rohrsystem K eingeführt und abgespannt ist. Dabei ergibt sich zwangsläufig ein Durchhang mit an sich bekanntem bogenförmigen Verlauf, wobei sich bei freier Führung in der Mitte der größte Durchhang DHO einstellt. Dieser Durchhang DHO kann für den normalen Kanal- oder Rohrsystembetrieb störend sein, da z.B. Reinigungsgeräte anstoßen oder sich Unrat bis zur Verstopfung ansammelt.

In FIG 13 wird die Wirkung der vorliegenden Erfindung und eine Lösung des anstehenden Problems aufgezeigt. Es wird zur Vermeidung des störenden Durchhanges im Bereich des großen Durchhanges ein Anpressmittel an das Kanal- oder Rohrsystem K eingesetzt, mit dem das Kabel KB gegen die Innenwandung des Kanal- oder Rohrsystems angepresst wird. Dies hat zur Folge, daß sich der ursprünglich große Durchhang aufteilt in kleinere Durchhänge DHM, die sich dann jeweils in der Mitte der abgeteilten Bereiche bzw. Abspannlängen einstellen. Dabei kann davon ausgegangen werden, daß bei gleichem Kabel KB, gleicher Abspannkraft und gleicher Gesamtabspannlänge die in den Teilbereichen sich einstellenden Durchhänge DHM etwa nur mehr ¼ des ursprünglichen Durchhanges DHO betragen, wenn ein Anpressmittel mittig in der Gesamtabspannlänge angeordnet wird. Für die Abstützung des Kabels KB wird z.B. ein sog. Partlinter PL eingeführt und aufgeweitet, wie bereits oben im allgemeinen Teil beschrieben wurde. Bei großen Abspannlängen können auch mehrere Abstützungen mit Partlinern PL oder mit Hilfe von aufweitbaren oder aufspreizbaren Ringen vorgenommen werden. Die Anzahl solcher Abstützungen richtet sich dabei im wesentlichen nach dem verwendeten Kabel KB, den Abspannkräften und der Länge des Gesamtabspannbereiches, wobei die Einsetzung und Installierung der Anpressmittel jeweils mit entsprechend geeigneten Robotern in der bereits beschriebenen Weise erfolgt. Es ist hier nicht gezeigt, daß zusätzlich auch aufspreizbare oder aufweitbare Kunststoff- oder Stahlringe eingesetzt werden können, die dann zweckmäßigerweise von nachträglich eingesetzten Partlinern der beschriebenen Art überdeckt werden.Diese zusätzlichen Abstützungen sind z.B. nötig, wenn besonders schwere Kabel oder zugfeste Elemente verwendet werden.

## Patentansprüche

1. Verfahren zur Befestigung von Kabeln oder langgestreckten Hohlprofilen in Kanal- oder Rohrsystemen für fließende Medien wie Gas, Ab-, Regen- oder Mischwasser,
**dadurch gekennzeichnet,**
daß mindestens ein zugfestes Element (ZE) zwischen zugänglichen Stellen (KE) innerhalb des Kanal- oder Rohrsystems (K) gespannt wird und daß daran das zu verlegende Kabel (KB2) mit Befestigungsmitteln (BE) angehängt wird.

2. Verfahren zur Befestigung von Kabeln oder langgestreckten Hohlprofilen in Kanal- oder Rohrsystemen für fließende Medien wie Gas, Ab-, Regen- oder Mischwasser,
**dadurch gekennzeichnet,**
daß ein Kabel (KB, KB1,KB3, KB4) oder ein langgestrecktes Hohlprofil (HP1, HP2, HP3) mit mindestens einem zugfesten Element (ZE) verwendet wird und daß mindestens ein zugfestes Element (ZE) des Kabels (KB, KB1, KB3, KB4) oder des Hohlprofils (HP1, HP2, HP3) zwischen zugänglichen Stellen (KE) innerhalb des Kanal- oder Rohrsystems (K) gespannt wird.

3. Verfahren nach einem der vorhergehenden Ansprüche,
**dadurch gekennzeichnet,**
daß das Kabel (KB, KB1, KB2, KB3, KB4) oder das langgestreckte Hohlprofil (HP1, HP2, HP3) in das Kanal- oder Rohrsystem (K) eingebracht wird, daß Abspannpunkte (ASP1, ASP2) an zugänglichen Stellen (KE1, KE2) der Wandungen angesetzt werden, daß jeweils an den Abspannpunkten (ASP1, ASP2) ein Abspannelement an dem Kabel (KB, KB1, KB2, KB3, KB4) oder dem langgestreckten Hohlprofil (HP1, HP2, HP3) befestigt wird, daß ein Abspannelement (AS) an einem Abspannpunkt (ASP2) eingehängt wird, daß ein Spannschloß (SS) in Reihe zum Abspannelement (AS) des anderen Abspannpunktes (ASP1) eingesetzt wird, daß das Spannschloß (SS) an diesem Abspannpunkt (ASP1) eingehängt wird und daß schließlich mit dem Spannschloß (SS) das Spannen mindestens eines zugfesten Elementes (ZE) erfolgt.

4. Verfahren nach Anspruch 1,
**dadurch gekennzeichnet,**
daß als Befestigungsmittel (BE) für das Kabel (KB2) Klemmen, Schellen oder Ösen verwendet werden.

5. Verfahren nach einem der Ansprüche 1 bis 3,
**dadurch gekennzeichnet,**
daß als Befestigungsmittel Abspannspiralen (AS) aus Edelstahl oder glasfaserverstärktem Kunststoff (GFK) verwendet werden.

6. Verfahren nach einem der vorhergehenden Ansprüche,
**dadurch gekennzeichnet,**
daß die Abspannpunkte (ASP1, ASP2) für die zugfesten Elemente (ZE) in Einstiegschächten des Kanal- oder Rohrsystems angeordnet werden.

7. Verfahren nach einem der vorhergehenden Ansprüche,
**dadurch gekennzeichnet,**
daß Umlenkhalterungen bei Biegungen oder Abzweigungen des Kanal- oder Rohrsystems (K) angeordnet werden.

8. Verfahren nach Anspruch 1,
**dadurch gekennzeichnet,**
daß als zugfestes Element (ZE) ein korrosionsbeständiges, vorzugsweise verseiltes Tragseil mit oder ohne Schutzumhüllung verwendet wird.

9. Verfahren nach Anspruch 1,
**dadurch gekennzeichnet,**
daß als zugfestes Element (ZE) ein dielektrisches Seil verwendet wird.

10. Verfahren nach Anspruch 2,
**dadurch gekennzeichnet,**
daß ein Kabel (K, KB) oder ein langgestrecktes Hohlprofil (HP1, HÜ2, HP3) verwendet wird, an dem mindestens ein zugfestes Element (ZE) mit Umhüllung längsverlaufend und festhaftend am Kabelmantel (KM) oder dem Hohlprofil (HP1) angeordnet ist, wobei das zugfeste Element (ZE) am Kabelmantel (KM) oder Hohlprofil (HP) mit gleicher Materialumhüllung angespritzt oder koextrudiert ist.

11. Verfahren nach einem der vorhergehenden Ansprüche,
**dadurch gekennzeichnet,**
daß ein Mikrokabel (K), bestehend aus einem Rohr und darin lose eingebrachten Lichtwellenleitern (LWL) verwendet wird.

12. Verfahren nach einem der Ansprüche 1 oder 2,
**dadurch gekennzeichnet,**
daß ein Hohlprofil (HP1, HP2, HP3) mit zunächst leerem längsverlaufendem Hohlraum (H1, H2, H3) verwendet wird und daß nachträglich bei Bedarf Lichtwellenleiter (LWL) oder Kupferleiter in den Hohlraum (H1, H2, H3) eingebracht werden.

13. Verfahren nach Anspruch 12,
**dadurch gekennzeichnet,**
daß ein Hohlprofil (HP1, HP3) mit rundem Querschnitt verwendet wird.

14. Verfahren nach Anspruch 12,
**dadurch gekennzeichnet,**
daß ein Hohlprofil (HP2) mit flachem oder ovalem Querschnitt verwendet wird.

15. Verfahren nach einem der Ansprüche 1 oder 2,
**dadurch gekennzeichnet,**
daß ein Kabel mit Lichtwellenleitern (LWL) zur Übertragung von optischen Informationen verwendet wird.

16. Verfahren nach einem der Ansprüche 1 oder 2,
**dadurch gekennzeichnet,**
daß ein Kabel mit elektrischen Leitern zur Übertragung von elektrischen Informationen verwendet wird.

17. Verfahren nach einem der Ansprüche 1 oder 2,
**dadurch gekennzeichnet,**
daß ein Kabel mit Lichtwellenleitern (LWL) und elektrischen Leitern verwendet wird.

18. Verfahren nach einem der vorhergehenden Ansprüche,
**dadurch gekennzeichnet,**
daß bei der Benutzung von elektrisch leitenden zugfesten Elementen (ZE) über sie elektrische Informationen gesendet und/oder daß eine Stromversorgung für elektrische Verbraucher angeschlossen wird.

19. Kabelnetz in einem Kanal- oder Rohrsystem für fließende Medien wie Gas, Ab-, Regen- oder Mischwasser,
**dadurch gekennzeichnet,**
daß ein Kabel (KB, KB1, KB2,KB3, KB4) oder ein langgestrecktes Hohlprofil (HP1, HP2, HP3) innerhalb des Kanals (K) oder Rohres an mindestens einem abgespannten zugfesten Element (ZE) mit Befestigungselementen (BE) fixiert ist, wobei die Enden des zugfesten Elementes (ZE) in entsprechenden Abspannabständen an Abspannpunkten (ASP1, ASP2) mit Abspannelementen (AS, SS) befestigt sind.

20. Kabelnetz in einem Kanal- oder Rohrsystem für fließende Medien wie Gas, Ab-, Regen- oder Mischwasser,
**dadurch gekennzeichnet,**
daß ein Kabel (KB) oder ein langgestrecktes Hohlprofil (HP) mit mindestens einem im oder am Kabelmantel (KM) oder dem Hohlprofil (HP) angeordneten zugfesten Element (ZE) innerhalb des Kanals (K) oder Rohres abgespannt ist, wobei das im oder am Kabelmantel (KM) oder Hohlprofil (HP) angebrachte zugfeste Element (ZE) in entsprechenden Abspannabständen an den Abspannpunkten (ASP1, ASP2) mittels Abspannelementen (AS, SS) befestigt ist.

21. Kabelnetz nach Anspruch 19 oder 20,
**dadurch gekennzeichnet,**
daß ein Kabel (KB) innerhalb des langgestreckten Hohlprofils (HP1, HP2, HP3) eingebracht ist.

22. Kabelnetz nach einem der Anspüche 19 bis 21,
**dadurch gekennzeichnet,**
daß Lichtwellenleiterkabel, Mikrokabel, bestehend aus einem Röhrchen und lose darin eingebrachten Lichtwellenleitern, Lichtwellenleiter-Maxibündel, Lichtwellenleiter-Bändchen oder elektrische Kabel angeordnet sind.

23. Kabelnetz nach einem der Ansprüche 20 bis 22,
**dadurch gekennzeichnet,**
daß mindestens ein zugfestes Element (ZE) innerhalb des Kabelmantels (KM) oder des Hohlprofils (HP2, HP3) angeordnet ist.

24. Kabelnetz nach einem der Ansprüche 20 bis 22,
**dadurch gekennzeichnet,**
daß mindestens ein zugfestes Element (ZE) außerhalb des Kabelmantels (KM) oder des Hohlprofils (HP1) angeordnet ist.

25. Kabelnetz nach einem der Ansprüche 20 bis 22,
**dadurch gekennzeichnet,**
daß mindestens ein zugfestes Element (SS) in einer Ausformung (AF) des Kabelmantels (KM) oder des Hohlprofils angeordnet ist.

26. Kabelnetz nach einem der Ansprüche 20 bis 25,
**dadurch gekennzeichnet,**
daß das Kabel (KB) oder das Hohlprofil (HP1, HP3) runden Querschnitt aufweist.

27. Kabelnetz nach einem der Ansprüche 20 bis 25,
**dadurch gekennzeichnet,**
daß das Kabel oder das Hohlprofil (HP2) einen flachen oder ovalen Querschnitt aufweist.

28. Kabelnetz nach einem der Ansprüche 19 bis 27,
**dadurch gekennzeichnet,**
daß das zugfeste Element und/oder das Kabel mit oder ohne zugfestem Element freihängend abgespannt sind/ist.

29. Kabelnetz nach einem der Ansprüche 19 bis 28,
**dadurch gekennzeichnet,**
daß mehrere Abspanneinheiten parallel verlaufend angeordnet sind.

30. Kabelnetz nach einem der Ansprüche 19 bis 29,
**dadurch gekennzeichnet,**
daß die Abspannelemente an den Abspannpunkten (ASP) angedübelt oder eingeschlagen sind.

31. Kabelnetz nach einem der Ansprüche 19 bis 29,
**dadurch gekennzeichnet,**
daß die Abspannelemente an einem Spreizelement oder Klemmring (KR) befestigt sind, wobei das Spreizelement oder der Klemmring (KR) in der Einlaßstelle(KE) des Kanal- oder Rohrsystems angeordnet ist.

32. Kabelnetz nach einem der vorhergehenden Ansprüche 19 bis 31,
**dadurch gekennzeichnet,**
daß in der Einlaßstelle (KE) eine Aufnahme für Kabel- und/oder Lichtwellenleiter-Überlängen angeordnet ist, zum Beispiel innerhalb des Klemmringes (KR).

33. Verfahren nach einem der Ansprüche 1 bis 18,
**dadurch gekennzeichnet,**
daß mindestens ein Anpressmittel (PL) im Bereich zwischen zwei Abspannpunkten innerhalb des Kanal- oder Rohrsystems (K) eingesetzt wird und daß anschließend durch Aufweitung des Anpressmittels (PL) das zugfeste Element mit einem angehängten Kabel oder ein Kabel mit mindestens einem zugfesten Element oder ein langgestrecktes Hohlprofil mit mindestens einem zugfesten Element (KB) gegen die Innenwandung des Kanal- oder Rohrsystems (K) gepresst wird.

34. Verfahren nach Anspruch 33,
**dadurch gekennzeichnet,**
daß als Anpressmittel ein Partliner (PL) aus einem mit Glasfasern verstärkten Kunststoffschlauch, der mit einem Kleber beschichtet oder durch durchtränkt ist, verwendet wird.

35. Verfahren nach einem der Ansprüche 33 oder 34,
**dadurch gekennzeichnet,**
daß als Anpressmittel ein aufweitbarer oder aufspreizbarer Kunststoff- oder Stahlring verwendet wird.

36. Verfahren nach einem der Ansprüche 33 bis 35,
**dadurch gekennzeichnet,**
daß das Anpressmittel (PL) auf eine aufblasbare Blase, vorzugsweise Gummiblase, aufgezogen wird, daß diese kombinierte Anordnung zum Einsatzort im Kanal- oder Rohrsystem zwischen zwei Abspannpunkten gebracht wird, vorzugsweise mit einem Roboter, daß die Blase aufgeblasen und dadurch das Anpressmittel (PL) gegen die Wandung gepresst wird und daß das zugfeste Element mit angehängtem Kabel, bzw. das Kabel oder das Hohlprofil mit jeweils zugfesten Elementen fixiert wird.

37. Verfahren nach einem der Ansprüche 33 bis 36,
**dadurch gekennzeichnet,**
daß der Kleber je nach verwendetem Material mit UV- oder Infrarotbestrahlung oder mit Heißluft ausgehärtet wird und daß die Blase vor oder nach der Aushärtung entfernt wird.

38. Verfahren nach Anspruch 35,
**dadurch gekennzeichnet,**
daß der Kunststoff- oder Stahlring durch Aufspreizung, vorzugsweise durch eine Spreizfeder, aufgeweitet wird.

39. Verfahren nach einem der Ansprüche 33 bis 38,
**dadurch gekennzeichnet,**
daß als Anpressmittel eine Kombination aus Partliner (PL) und Kunststoff- oder Stahlring verwendet wird.

40. Kabelnetz nach einem der Ansprüche 19 bis 32,
**dadurch gekennzeichnet,**
daß ein Anpressmittel zwischen den Abspannpunkten innerhalb des Kanal- oder Rohrsystems (K) angeordnet ist, das gegen die Innenwandung so spreizbar oder anpressbar ist, daß das Kabel (KB) oder das langgestreckte Hohlprofil zusätzlich fixiert ist.

41. Kabelnetz nach Anspruch 40,
**dadurch gekennzeichnet,**
daß das Anpressmittel (PL) ein aufweitbarer, vorzugsweise glasfaserverstärkter Kunststoffschlauch ist, der mit einem Kleber, vorzugsweise einem aushärtbaren Kleber, beschichtet oder getränkt ist.

42. Kabelnetz nach Anspruch 40 oder 41,
**dadurch gekennzeichnet,**
daß das Anpressmittel als aufweitbarer oder aufspreizbarer Kunststoff- oder Stahlring ausgebildet ist.

43. Kabelnetz nach einem der Ansprüche 40 bis 42,
**dadurch gekennzeichnet,**
daß eine aufblasbare Blase innerhalb des Anpressmittels (PL) zu dessen Aufspreizung und Anpressung angeordnet ist und daß die Blase vor oder nach der Montage des Anpressmittels entfernbar ist.
